# EUROPÄISCHE PATENTANMELDUNG

(11) **EP 1 598 544 A2**
(43) Veröffentlichungstag der Anmeldung: **23.11.2005**
(21) Anmeldenummer: 05013294.3
(22) Anmeldetag: 26.09.2003
(51) Int. Cl.: F02M 25/08, F02D 35/00, F16K 37/00

(54) **Vorrichtung zum dosierten Einpeisen von flüchtigen Kraftstoffbestandteilen insbesondere in das Ansaugrohr einer Verbrennungskraftmaschine eines Kraftfahrzeugs**

(30) Priorität: 06.03.2003 DE 10310109
(62) Teilanmeldung aus: 03021800.2
(71) Anmelder: Carl Freudenberg KG, 69469 Weinheim (DE)
(72) Erfinder: Klatt, Christopher, 69118 Heidelberg (DE); Gerlich, Thorsten, 64625 Bensheim (DE); Klesen, Christof, 64397 Modautal (DE)

(57) **Zusammenfassung**

Es wird eine Anordnung zum dosierten Einspeisen von flüchtigen Kraftstoffbestandteilen insbesondere in das Ansaugrohr einer Verbrennungskraftmaschine eines Kraftfahrzeugs, umfassend ein elektromagnetisches Regenerierventil (1), das im pulsweiten-modulierten Proportionalbetrieb angesteuerbar ist, und einen Regelkreis, mittels welchem zur Kompensation von äußeren Störgrößen der Spulenstrom des Regenerierventils (1) einstellbar ist, beschrieben, welche dadurch gekennzeichnet ist, dass Einrichtungen zur Erfassung des Abstands zwischen dem Ventilsitz und dem Dichtelement (4) des Ventils vorgesehen sind und dass der Spulenstrom in Abhängigkeit von dem erfassten Abstand Größen einstellbar ist.

## Beschreibung

### Technisches Gebiet

Die Erfindung betrifft eine Anordnung zum dosierten Einspeisen von flüchtigen Kraftstoffbestandteilen insbesondere in das Ansaugrohr einer Verbrennungskraftmaschine eines Kraftfahrzeugs, umfassend ein elektromagnetisches Regenerierventil, das im pulsweiten-modulierten Proportionalbetrieb ansteuerbar ist, und einen Regelkreis, mittels welchem zur Kompensation von äußeren Störgrößen der Spulenstrom des Regenerierventils einstellbar ist.

### Stand der Technik

Es ist bekannt, die in der Tankanlage eines Kraftfahrzeugs befindlichen flüchtigen Kraftstoffdämpfe aufzufangen und zu speichern und schließlich dosiert dem Saugrohr der Verbrennungskraftmaschine des Kraftfahrzeugs zuzuführen. Als Einrichtung zum Auffangen und Speichern der Kraftstoffdämpfe wird in der Regel ein Aktivkohlebehälter verwendet. Aktivkohle bindet (absorbiert) den Kraftstoffdampf und gibt ihn bei entsprechender Belüftung wieder frei. Im Fahrbetrieb wird daher durch den Motor Frischluft durch den Aktivkohlebehälter gesaugt, die den Kraftstoff aufnimmt und dem Motor zuführt. Die Zudosierung des Luft-Kraftstoffgemischs erfolgt über ein sogenanntes Regenerierventil. Bei einem Regenerierventil handelt es sich üblicherweise um ein elektromagnetisch angetriebenes Ventil, das eine Magnetspule, einen Anker mit Dichtelement, einen Dichtsitz sowie eine Rückstellfeder (Schließfeder) umfasst. Im bestromten Zustand hebt der Anker durch die Magnetkraft der Spule das Dichtelement gegen die Federkraft der Schließfeder vom Dichtsitz ab und gibt dadurch die Durchflussöffnung frei. Das Ventil befindet sich in seiner Öffnungsposition. Im unbestromten Zustand wird das Dichtelement durch die Schließfeder auf den Dichtsitz gepresst, das Ventil befindet sich in Schließposition.

Die Ansteuerung des Regenerierventils erfolgt über die Motorsteuerung, die entsprechend dem jeweiligen Lastzustand der Verbrennungskraftmaschine den jeweils maximal zudosierbaren Luft-Kraftstoff-Massenstrom ermittelt und in ein entsprechendes Steuersignal umsetzt. Das Regenerierventil wird dabei in der Regel getaktet (pulsweitenmoduliert) angesteuert und gibt, abhängig von dem von der Motorsteuerung jeweils vorgegebenen Tastverhältnis, unterschiedliche Dosiermengen ab. Unter Tastverhältnis wird in diesem Zusammenhang das Verhältnis zwischen der Periodendauer des geöffneten Ventils zur Gesamtperiodendauer, d. h. der Periodendauer des geöffneten und geschlossenen Ventils, zur verstanden

Um die oszillierende Bewegung des Magnetankers mit dem Dichtelement zwischen der Öffnungs- und Schließposition, was verschiedene Nachteile mit sich bringt, zu vermeiden, ist es auch bekannt, beispielsweise aus der WO 99/06893, das getaktete Regenerierventil im sogenannten Proportionalbetrieb zu betreiben. Hierbei soll die Taktfrequenz so hoch gewählt werden, dass das Ventil der oszillierenden Anregung nicht mehr folgen kann und stattdessen jeweils in einer Position verharrt, die dem jeweiligen mittleren Spulenstrom entspricht.

Rein gesteuerte Regenerierventile besitzen bedingt durch Fertigungstoleranzen, Alterung, Bordnetzschwankungen und Temperaturschwankungen, beispielsweise durch Selbsterwärmung der Spule, eine relativ große Toleranzbreite in ihrer Kennlinie (Massenstrom in Abhängigkeit von der Ansteuerzeit). Dies führt dazu, dass, um einen zu hohen Massenstrom durch das Regenerierventil sicher ausschließen zu können, die mögliche Regenerierleistung nicht voll ausgeschöpft werden kann. Andererseits steht eine Verschärfung der Abgasrichtlinien bevor, die eine Erhöhung der Regenerierleistung zwingend erforderlich macht. Eine Erhöhung der Regenerierleistung ist aber nur sehr schwer zu erreichen und nur unter sehr hohem Aufwand in der Applikation, d. h. es werden sehr aufwendige Behandlungsalgorithmen entworfen, um ein Maximum an Regenerierleistung zu erhalten.

Um störende Einflüsse auf die Dosiergenauigkeit des Ventils verursacht durch Bordnetz- oder Temperaturschwankungen zu kompensieren, ist in der WO 99/06893 A1 ein sehr komplexer Regelkreislauf vorgesehen, bei welchem der jeweils aktuelle Spulenstrom jeweils ermittelt, digitalisiert und einem in der Motorsteuerung befindlichen Mikroprozessor zugeführt wird. Dieser ermittelt in einem komplizierten Algorithmus aus diesem Signal und weiteren Eingangsgrößen schließlich das Steuersignal für den Spulenstrom.

### Darstellung der Erfindung

Aufgabe der Erfindung ist, eine Anordnung der eingangs genannten Art so weiter zu entwickeln, dass die Dosiergenauigkeit und damit die Regenierleistung erhöht wird.

Diese Aufgabe wird gelöst mit einer Anordnung mit allen Merkmalen des Anspruchs 1. Vorteilhafte Ausgestaltungen der Erfindung sind in den Unteransprüchen beschrieben.

Gemäß der Erfindung sind bei einer Anordnung zum dosierten Einspeisen von flüchtigen Kraftstoffbestandteilen insbesondere in das Ansaugrohr einer Verbrennungskraftmaschine eines Kraftfahrzeugs, umfassend ein elektromagnetisches Regenerierventil, das im pulsweiten-modulierten Proportionalbetrieb ansteuerbar ist, und einen Regelkreis, mittels welchem zur Kompensation von äußeren Störgrößen der Spulenstrom des Regenerierventils einstellbar ist, Einrichtungen zur Erfassung des Abstands zwischen dem Ventilsitz und dem Dichtelement des Ventils vorgesehen, wobei der Spulenstrom von dem erfassten Abstand einstellbar ist.

Die erfindungsgemäße Lösung hat den Vorteil, dass nicht nur Störeinflüsse durch Bordnetzschwankungen oder Temperaturschwankungen zuverlässig eliminiert werden können. Prinzipiell können durch die direkte Messung der Größe des Öffnungspaltes selbst nahezu alle störenden Sekundäreinflüsse, wie Toleranzen in der Spule und in dem Magnetkreis, Reibung, Setzverhalten des Dichtelements, Abrieb der Dichtung, Quellung, Kleben und Adhäsion des Dichtelements am Dichtsitz usw. zuverlässig ausgeschaltet werden.

Erfindungsgemäß wird die Spalthöhe, d. h. der Abstand zwischen dem Ventilsitz und dem Dichtelement als Maß für die Durchflußmenge herangezogen, da diese Maßnahme sich im Gegensatz zur Messung eines Massenstroms oder von CHₓ-Anteilen im Volumenstrom fertigungstechnisch einfacher realisieren lässt.

Eine erfindungsgemäße Anordnung weist daher Einrichtungen zur Erfassung des Abstands zwischen dem Dichtelement und dem Ventilsitz auf. Diese Einrichtungen können auf der Ausnutzung elektrischer, optischer und/oder magnetischer Effekte beruhen. Allen erfindungsgemäß vorgeschlagenen Lösungen ist daher gemeinsam, dass ein physikalisches Feld, beispielsweise ein elektrisches oder ein Magnetfeld oder aber auch ein "Lichtfeld" erzeugt wird und zugeordnete Sensoreinrichtungen (z. B. kapazitiver oder induktiver Sensor, Hall-Sensor oder optischer Sensor) zur Erfassung von zeitlichen und/oder örtlichen Änderungen dieser Felder vorgesehen sind. Diese zeitlichen und/oder örtlichen Änderungen werden durch die Lageänderung des Dichtelements bewirkt, in der Weise, dass die das Feld erzeugende Einrichtung und der zugeordnete Sensor in Abhängigkeit von dieser Lageänderung relativ zueinander bewegt werden. Vorteilhafterweise ist die das Feld erzeugende Einrichtung mit dem Dichtelelement fest verbunden und folgt dessen Lageänderung, während die Sensoreinrichtung am Gehäuse des Ventils fixiert ist.

In einer besonders bevorzugten Ausführungsform der Erfindung umfassen die Einrichtungen zur Erfassung der Spalthöhe ein weichmagnetisches Element sowie ein wenigstens eine elektrische Leiterschleife umfassendes Sensorelement, welche so angeordnet sind, dass sich in Abhängigkeit von einer Lageänderung des Dichtelements relativ zum Dichtsitz der durch das weichmagnetische Element erzeugte magnetische Fluss durch die wenigstens eine Leiterschleife ändert und eine in ein ektrisches Steuersignal umwandelbare Messgröße erzeugt.

Vorzugsweise ist dabei das magnetische Element mit dem Dichtelement fest verbunden und das Sensorelement am Ventilgehäuse fixiert.

In einer weiteren bevorzugten Ausführungsform der Erfindung ist das permanentmagnetische Element an dem dem Dichtelement entgegegesetzten Ende eines mit dem Dichtelement fest verbundenen Stössels angeordnet. Dabei kann der gesamte Stössel aus einem permanentmagnetischen Material bestehen. Vorteilhafterweise kommt bei den oben beschriebenen Ausführungsformen ein Hall-Sensor eine Feldplatte oder ein magnetoresisiver Sensor als Sensorelement zum Einsatz.

Ebenso kann ein Stössel aus wenigstens an dem betreffenden Ende ferromagnetischem Material, vorgesehen sein, beispielsweise aus kunststoffgebundenen Ferriten, wobei aber induktive Sensoren, z. B. eine Luftspule, zur Effassung von Feldänderungen einzusetzen sind.

In einer weiteren bevorzugten Ausführungsform der Erfindung umfassen die Einrichtungen zur Erfassung des Abstands eine ein optisches Signal erzeugende Vorrichtung sowie wenigstens einen optischen Sensor, wobei Mittel vorgesehen sind, welche zu einer Änderung des optischen Signals in Abhängigkeit von einer Lageänderung des Dichtelements relativ zum Dichtsitz führen, wodurch eine in ein ektrisches Steuersignal umwandelbare Messgröße erzeugt wird. Vorzugsweise umfassen diese Mittel eine optisch reflektierende Fläche, die mit dem Dichtelement fest verbunden ist, an welcher das optische Signal reflektierbar ist. Der Einfachheit halber kommt auch bei dieser Variante der oben erwähnte Stössel zum Einsatz.

In einer weiteren bevorzugten Ausführungsform der Erfindung ist das Dichtelement, wie bereits oben beschrieben, mit einem Stössel fest verbunden ist, der wenigstens an seinem dem Dichtelement entgegengesetzten Ende aus einem lichtschwächendem Material besteht und der mit diesem Ende in Abhängigkeit von einer Lageänderung des Dichtelements in eine durch eine Lichtquelle und das optische Sensorelement gebildete Lichtschranke eintauchbar ist.

Als optische Sensoren können bei den oben beschriebenen Varianten beispielsweise Photodioden und/oder Phototransistoren zur Anwendung kommen.

Die beschriebenen optischen Verfahren haben gegenüber den auf elektrischen bzw. elektromagnetischen Effekten beruhenden Verfahren den Vorteil, dass sie sehr kostengünstig sind. Nachteilig ist, dass sie nur bei Umgebungstemperaturen von bis zu 85 °C einsetzbar sind und dass die Gefahr von Störeinflüssen durch Verschmutzungen sehr groß ist.

Unter den "elektromagnetischen Verfahren" sind solche mit einem Hall-Sensor als Sensorelement zu bevorzugen, da es sich hierbei zwar um die kostspieligsten, aber auch stabilsten Systeme handelt.

Im folgenden wird beispielhaft eine Möglichkeit für die Regelung des Abstandes zwischen dem Dichtelement und dem Dichtsitz mit einer erfindungsgemäßen Anordnung beschrieben: Das Motorsteuergerät gibt eine Soll-Anforderung für den Massenstrom heraus. Das Ventilsteuergerät errechnet daraus den zugehörigen Wert für den Dichtspalt (Tabelle). Dieser Spalt dient als Spalt-Soll-Vorgabe des Lageregelkreises und wird mit einem von einem der oben beschrieben Meßwertaufnehmer erfassten Wert verglichen. Dieser Vergleichswert wird einem Regler zugeführt, der z. B. als PID-Struktur implementiert sein kann. Der Reglerausgang steuert eine Leistungsstufe derart an, dass in der Spule des elektromagnetischen Aktors ein Strom fließt, der über die elektromagnetische Kraftwirkung wiederum eine Kraft erzeugt, die der integrierten Feder entgegenwirkt und das mit dem Anker verbundene Dichtelement in die geforderte Soll-Spalt-Position bringt.

Um z. B. Alterungsvorgänge zu kompensieren, erlaubt die vorliegende Erfindung beispielsweise eine weitere Funktion, bei der die Position, bei der der Spalt gerade öffnet automatisch gefunden wird. Diese Position enstpricht dem Tabellenwert (s. o.) 0. Dazu wird das Ventil stromlos geschaltet und der Sensorwert erfasst. Dann wird bestromt und der Sensorwert wiederum erfasst. Dieser Wert entspricht dem Maximalhub. Die vorliegende Erfindung erlaubt somit einen Stellalgorithmus, bei welchem Nullung, Kalibrierung bei geschlossenem und voll geöffnetem Ventil dynamisch während der Lebensdauer stattfinden kann (=Tara-Funktion).

Weiterhin ist eine Kennlinienkorrektur bei der Produktion möglich.

### Figurenbeschreibung

Nachfolgend wird die Erfindung anhand der Figuren näher erläutert.

Es zeigen:
- Fig. 1: eine erfindungsgemäße Anordnung mit optischer Lageregelung;
- Fig. 2: eine weitere erfindungsgemäße Anordnung mit optischer Lageregelung;
- Fig. 3: zwei (a, b) erfindungsgemäße Anordnungen mit induktiver Lageregelung;
- Fig. 4: eine erfindungsgemäße Anordnung mit Hall-Sensor und Permanetmagnet.

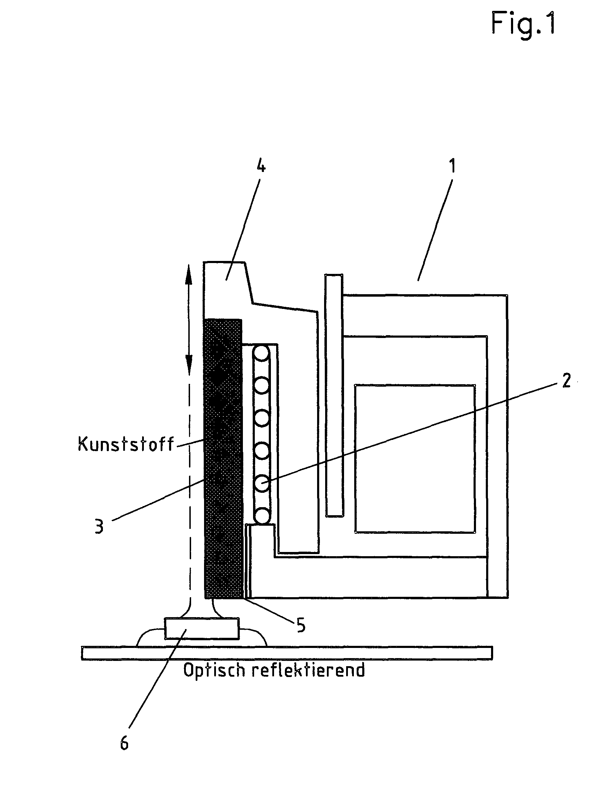

Man erkennt in den Figuren in schematischer Längsschnittdarstellung und in Teilansicht jeweils ein elektromagnetisches Regenerierventil 1 mit einer Spule 2. In der Spule 2 ist gemäß einer bevorzugten Ausführungsform der Erfindung ein Stössel 3 angeordnet, der mit dem Dichtelement 4 des Ventils fest verbunden ist. In Fig. 1 weist der Stössel 3 an seinem dem Dichtelement entgegengesetzten Ende eine optisch reflektierende Fläche 5 auf. Ein Lichtstrahl wird auf diese Fläche geleitet, reflektiert und von einem optischen Sensor 6 erfasst. Da sich die reflektierende Fläche mit der Lageänderung des Dichtelements 4 mitbewegt, ändert sich das reflektierte Signal in Abhängigkeit von dieser Lageänderung und gibt ein Maß für die Spalthöhe.

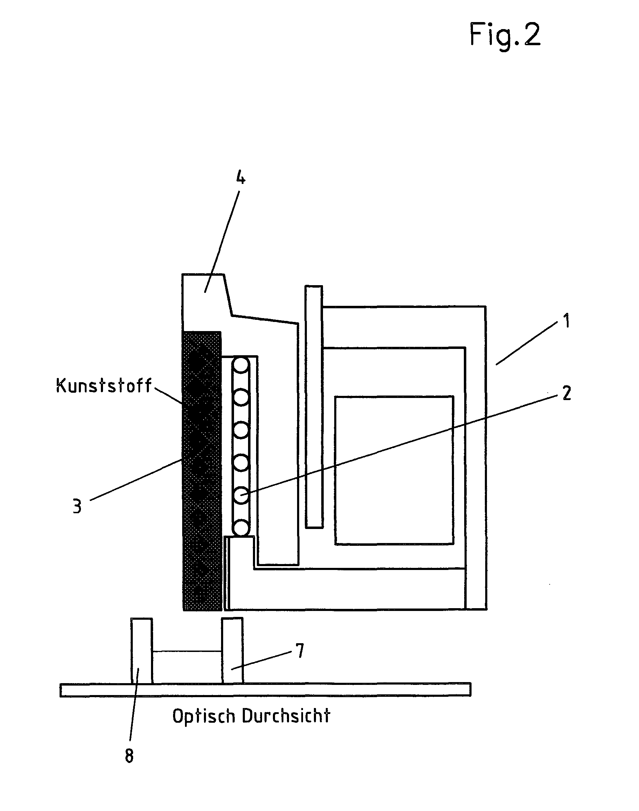

Bei der in Figur 2 dargestellten Variante ist der Stössel 3 aus einem lichtundurchlässigen Material gefertigt und greift nach in eine durch Lichtquelle 7 und Sensor 8 gebildete Lichtschranke ein. Die Intensität des auf den Sensor 8 auftreffenden Lichtstrahls nimmt dadurch ab.

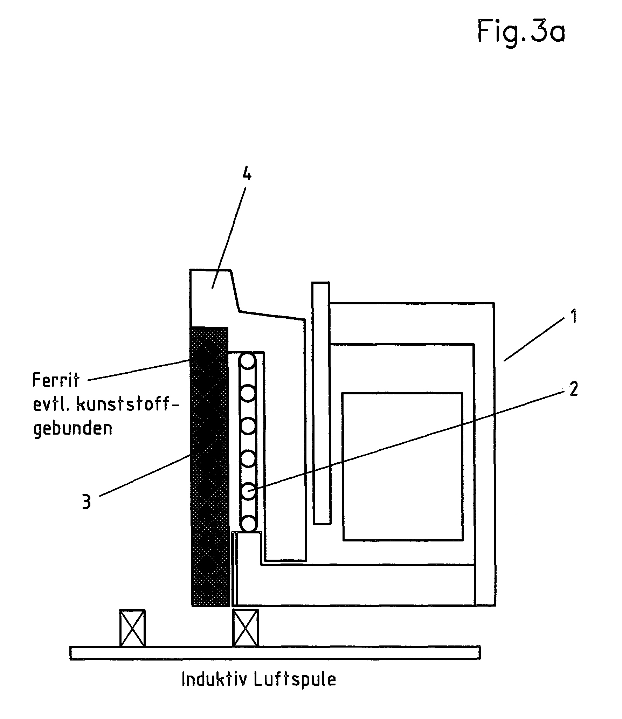

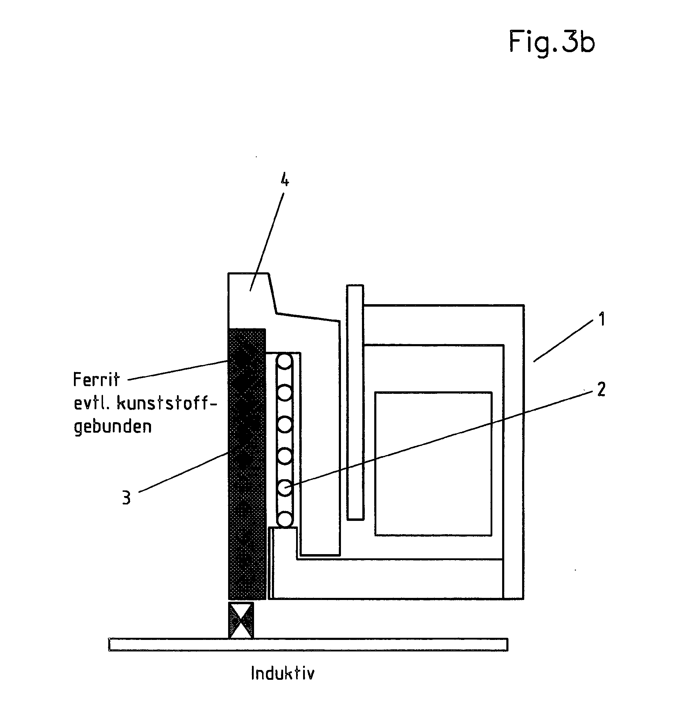

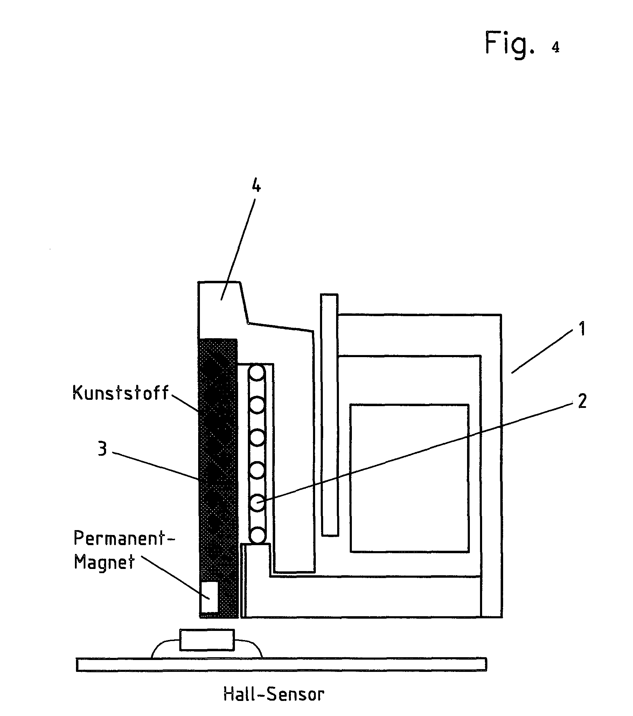

In den Figuren 3a und b sind zwei induktive Varianten dargestellt. Figur 4 zeigt eine Ausführungsfrom mit Hall-Sensor 9 und Permanentmagnet 10.

## Patentansprüche

1. Anordnung zum dosierten Einspeisen von flüchtigen Kraftstoffbestandteilen insbesondere in das Ansaugrohr einer Verbrennungskraftmaschine eines Kraftfahrzeugs, umfassend ein elektromagnetisches Regenerierventil, das im pulsweiten-modulierten Proportionalbetrieb ansteuerbar ist, und einen Regelkreis, mittels welchem zur Kompensation von äußeren Störgrößen der Spulenstrom des Regenerierventils einstellbar ist, **dadurch gekennzeichnet, dass** Einrichtungen zur Erfassung des Abstands zwischen dem Ventilsitz und dem Dichtelement des Ventils vorgesehen sind und dass der Spulenstrom in Abhängigkeit von dem erfassten Abstand einstellbar ist.

2. Anordnung nach Anspruch 1, **dadurch gekennzeichnet, dass** die Einrichtungen zur Erfassung des Abstands ein ferromagnetisches Element sowie ein wenigstens eine elektrische Leiterschleife umfassendes Sensorelement umfassen, welche so angeordnet sind, dass sich in Abhängigkeit von einer Lageänderung des Dichtelements relativ zum Dichtsitz der durch das ferromagnetische Element erzeugte magnetische Fluss durch die wenigstens eine Leiterschleife ändert und eine in ein ektrisches Steuersignal umwandelbare Messgröße erzeugt.

3. Anordnung nach Anspruch 2, **dadurch gekennzeichnet, dass** das ferromagnetische Element mit dem Dichtelement fest verbunden ist und das Sensorelement am Ventilgehäuse fixiert ist.

4. Anordnung nach Anspruch 3, **dadurch gekennzeichnet, dass** das ferromagnetische Element an dem dem Dichtelement entgegegesetzten Ende eines mit dem Dichtelement fest verbundenen Stössels angeordnet ist oder der Stössel aus einem ferromagnetischen Material besteht.

5. Anordnung nach Anspruch 4, **dadurch gekennzeichnet, dass** das ferromagnetische Material kunststoffgebundene Ferrite umfasst.

6. Anordnung nach Anspruch 1, **dadurch gekennzeichnet, dass** die Einrichtungen zur Erfassung des Abstands ein permanentmagnetisches Element sowie einen Magnetfeldsensor umfassen, welche so angeordnet sind, dass in Abhängigkeit von einer Lageänderung des Dichtelements relativ zum Dichtsitz im Sensor eine in ein ektrisches Steuersignal umwandelbare Messgröße erzeugt wird.

7. Anordnung nach Anspruch 6, **dadurch gekennzeichnet, dass** der Magnetfeldsensor ein Hall-Sensor, eine Feldplatte oder ein magnetoresisiver Sensor ist.

8. Anordnung nach Anspruch 6 oder 7, **dadurch gekennzeichnet, dass** das permanentmagnetische Element an dem Ende eines fest mit dem Dichtelement verbundenen Stössels angeordnet ist, das dem Dichtelement entgegengesetzt ist, und dass der Sensor am Gehäuse des Ventils fixiert ist.

9. Anordnung nach Anspruch 1, **dadurch gekennzeichnet, dass** die Einrichtungen zur Erfassung des Abstands eine ein optisches Signal erzeugende Vorrichtung sowie wenigstens einen optischen Sensor umfassen und dass Mittel vorgesehen sind, welche zu einer Änderung des optischen Signals in Abhängigkeit von einer Lageänderung des Dichtelements relativ zum Dichtsitz führen, wodurch eine in ein ektrisches Steuersignal umwandelbare Messgröße erzeugt wird.

10. Anordnung nach Anspruch 9, **dadurch gekennzeichnet, dass** die Mittel eine mit dem Dichtelement fest verbundene, vorzugsweise an dem Ende eines mit dem Dichtelement fest verbundenen Stössels, das dem Dichtelement entgegengesetzt ist, angeordnete optisch reflektierenden Fläche umfassen, an welcher das optische Signal reflektierbar ist.

11. Anordnung nach Anspruch 9, **dadurch gekennzeichnet, dass** das Dichtelement mit einem Stössel fest verbunden ist, der wenigstens an seinem dem Dichtelement entgegengesetzten Ende aus einem lichtundurchlässigen Material besteht und der mit diesem Ende in Abhängigkeit von einer Lageänderung des Dichtelements in eine durch eine Lichtquelle und das optische Sensorelement gebildete Lichtschranke eintauchbar ist.

12. Anordnung nach Anspruch 1, **dadurch gekennzeichnet, dass** der Regelkreis einen Stellalgorithmus beinhaltet, bei welchem Nullung, Kalibrierung bei geschlossenem und/oder voll geöffnetem Ventil dynamisch während der Lebensdauer stattfinden kann (=Tara-Funktion).
